**Europäisches Patentamt**

**(19) European Patent Office**

**Office européen des brevets**

(11) Publication number : **0 429 088 B1**

## (12) EUROPEAN PATENT SPECIFICATION

(45) Date of publication of patent specification :
**16.03.94 Bulletin 94/11**

(51) Int. Cl.$^5$ : **C04B 35/26**

(21) Application number : **90122443.6**

(22) Date of filing : **24.11.90**

(54) **Lithium-titanium-zinc ferrites for microwave applications.**

(30) Priority : **24.11.89 IT 4859789**

(43) Date of publication of application :
**29.05.91 Bulletin 91/22**

(45) Publication of the grant of the patent :
**16.03.94 Bulletin 94/11**

(84) Designated Contracting States :
**AT BE CH DE FR GB LI NL SE**

(56) References cited :
**EP-A- 0 338 799**
**DE-A- 1 934 375**
**FR-A- 2 269 506**
**US-A- 3 630 912**

(73) Proprietor : **SELENIA INDUSTRIE**
**ELETTRONICHE ASSOCIATE S.p.A.**
**Via Tiburtina, KM 12.400**
**I-00131 Roma (IT)**

(72) Inventor : **Sparvieri, Nicola**
**Via dei Massimi 25**
**I-00136 Roma (IT)**
Inventor : **Cattarin, Paolo**
**Via Dervio 4**
**I-00125 Roma (IT)**

(74) Representative : **Gustorf, Gerhard, Dipl.-Ing.**
**Patentanwalt Dipl.-Ing. Gerhard Gustorf**
**Bachstrasse 6 A**
**D-84036 Landshut (DE)**

EP 0 429 088 B1

## Description

The present invention relates to the field of ceramic materials and their use in microwave devices and to a method of making such materials having improved microwave properties.

In US-A 3 630 912 microwave ferrites are disclosed which are made from a lithium- titanium ferrite containing a small amount of bismuth. In addition, small amounts of zinc, copper or manganese may also be present.

FR-A 2 269 506 relates to a ferromagnetic material based upon lithium for extremly high frequency applications, which also contains bismuth.

The present invention relates to ferrites for microwaves, in particular lithium-titanium-zinc ferrites having acceptable electromagnetic loss values, a lower Hc/Br ratio and an improved "square" hysteresis loop when compared to that of presently available materials, having the formula as indicated in claims 1 and 2, hereinafter referred to as formula II. These ferrites are useful in high frequency microwave electronic apparatuses.

It is an object of the present invention to provide a ferrite of the inverse spinel class, having on one hand acceptable electromagnetic loss values and on the other hand having a lower Hc/Br ratio, an improved "square" hysteresis loop and with practically negligible magneto-restrictive effects.

It is a further object of the invention to resolve some of the problems in connection to the performance of currently available materials for microwave ferrite phase shifters with regard to electromagnetic loss values, hysteresis properties, Hc/Br ratios and magneto-restrictive effects.

The previous microwave materials, such as Mg-Mn ferrites, the garnets of the Al:YIG type (YTTRIUM IRON GARNETS) of the Li-Ti ferrites have inferior magnetic hysteresis loop properties when compared to the ferrite ceramics of the present invention, for equal magnetic field waveforms.

The known Mg-Mn and Li-Ti ferrites, although they posses excellent "square" hysteresis loop properties, present high Hc/Br ratio values. The known Al:YIG garnets, although they posses good Hc/Br ratio values, possess a poor "square" hysteresis loop.

Table 1 compares known MgMn Ferrites, LiTi Ferrites, Al:YIG garnets, and the LiTiZn Ferrites of the present invention. In table 1, Hc is the coercitivity expressed in Oerstedt, where 1 Oe =$10/4\pi$ A/cm, and Br is the remanence expressed in Gauss, where 1G = $10^{-4}$ T=$10^{-8}$ Vs/cm$^2$.

### Table 1

|        |     |    | Hc  | Br  | Hc/Br        |
|--------|-----|----|-----|-----|--------------|
| Mg     | Mn  |    | 1.4 | 880 | $15*10^{-4}$ |
| Li     | Ti  |    | 3.0 | 900 | $33*10^{-4}$ |
| Al     | YIG |    | 0.5 | 830 | $6*10^{-4}$  |
| Li     | Ti  | Zn | 0.6 | 930 | $6*10^{-4}$  |

The ferrites of the invention are derived from the known material of Formula I:

$$\text{(I)} \qquad (Ti_tFe_{2-m-t}Mn_m) [Li_{0.5 + t/2}Fe_{0.5 - t/2}]O_4$$

t=0.6 m=0.1

The round brackets of formula I contain the elements present in the tetrahedral sites, and the square brackets contain those which are present in the octahedral sites. The present ferrite of Formula II is characterized by the substitution of 0.3 atoms per unit formula of zinc ion for iron ion in the octahedral sites.

$$\text{II} \qquad (Ti_tFe_{2-m-t}Mn_m) [Li_{0.5 + t/2- x/2}Fe_{0.5 - t/2 - x/2}Zn_x]O_4$$

t=0.6 m=0.1 x=0.3

### Example

The material is produced by way of ceramic technology; the oxides and the carbonate: $Fe_2O_3$, $Li_2CO_3$, $TiO_2$, $ZnO_2$, MnO, are mixed by weight following the stoichiometry of Formula II.

The oxides and carbonate are then mixed for 16 hours in a stainless steel sphere grinder containing deionized water. The oxide mixture is then desiccated in an oven and subjected to a 45 mesh sieve (325 μm). The material is oxidized in refractory clay crucibles at 840°C for 2,5 hours in an oxygen atmosphere. The thus oxidized material is subjected to a second cycle of 16 hours in a sphere grinder, which determines the grinding of the mixture. The ground mixture is then desiccated in a spray dryer, before addition of the binders and lubricants needed for the successive pressing stages. The ceramic powder, with added binders and lubricants, is then pressed, which is carried out at values of around 1 ton/cm² into desired shapes and forms. The organic binder is then very slowly eliminated by heating in forced air circulation ovens at temperatures up to 300°C. The final stages of sintering are performed at 980°C for 10 hours in an oxygen atmosphere, which results in a ceramic having typical ceramic density.

The determining characteristic of the invention is the partial substitution of Zn ions in the octahedral sites of the Li - Ti ferrites.

This process results in a material having the following microwave characteristics:

$4 \pi M_s$ = 0,145T (1450 Gauss)

$tg \delta$ = < $5*10^{-4}$

X" (5660MHz) = < $2.5*10^{-3}$

$\varepsilon$ = 17.5

Br = 0.093T (930 Gauss)

Hc = $3/2\pi$ A/cm (0,6 Oe)

Hc/Br = $6*10^{-4}$

## Claims

1. Method for producing a ferrite, comprising the steps of weighing the starting oxides and carbonate $Fe_2O_3$, $Li_2CO_3$, $TiO_2$, ZnO, MnO following the stoichiometry of

$$(Ti_t Fe_{2-m-t} Mn_m) [Li_{o.5 + t/2 - x/2} Fe_{o.5 - t/2 - x/2} Zn_x]O_4,$$

where t=0.6 m=0.1 x=0.3,

mixing the oxides and ferrites for 16 hours in a stainless steel sphere grinder containing deionized water, desiccating the mixture in an oven, sieving the ground mixture to 45 mesh, oxidizing the sieved mixture in a refractory clay crucible at 840°C for 2.5 hours in an atmosphere of oxygen, grinding the oxidized mixture in a second cycle for 16 hours in the sphere grinder, desiccating the ground oxidized mixture in a spray dryer, adding organic binders and lubricants, pressing the mixture comprising the desiccated mixture, binders and lubricants at about 1 ton/cm², to obtain the wanted forms, eliminating the organic binder very slowly by heating in a forced air circulation oven up to 300°C and sintering at 980°C for 10 hours in an oxygen atmosphere, whereby a ferrite results having the typical ceramic densification.

2. A ferrite having the following formula:

$$(Ti_t Fe_{2-m-t} Mn_m) [Li_{o.5 + t/2 - x/2} Fe_{o.5 - t/2 - x/2} Zn_x]O_4,$$

where t=0.6 m=0.1 x=0.3.

## Patentansprüche

1. Verfahren zur Herstellung eines Ferrites, umfassend die folgenden Schritte: Wiegen der Ausgangs-Oxide und Ausgangs-Karbonate $Fe_2O_3$, $Li_2CO_3$, $TiO_2$, ZnO und MnO entsprechend der folgenden Stöchiometrie:

$$(Ti_t Fe_{2-m-t} Mn_m) [Li_{0,5 + t/2 - x/2} Fe_{0,5 - t/2 - x/2} Zn_x]O_4$$

wobei t = 0,6, m = 0,1 und x = 0,3,

Mischen der Oxide und Ferrite über 16 Stunden in einer deionisiertes Wasser enthaltenden Kugelmühle aus rostfreiem Stahl, Trocknen der Mischung in einem Ofen, Sieben der gemahlenen Mischung bei einer Maschenweite von 45, Oxidation der gesiebten Mischung in einer Sauerstoffatmosphäre in einem feuerfesten Tontiegel über 2,5 Stunden bei 840°C, Mahlen der oxidierten Mischung in einem zweiten Zyklus von 16 Stunden in der Kugelmühle, Trocknen der gemahlenen, oxidierten Mischung in einem Sprühtrockner, Zugabe von organischen Bindemitteln und Schmiermitteln, Pressen der getrockneten, Binde- und Schmiermittel enthaltenden Mischung bei etwa 1 t/cm² zur Herstellung der gewünschten Formen, sehr langsames Absondern der organischen Bindemittel durch Erhitzen auf 300°C in einem Ofen mit Zwangsluftumlauf sowie Sintern bei 980°C über 10 Stunden in einer Sauerstoffatmosphäre, wodurch die gewonnenen Ferrite die typische keramische Verdichtung erhalten.

2. Ferrit mit der folgenden Zusammensetzung:

$$(Ti_t Fe_{2-m-t} Mn_m) [Li_{0,5 + t/2 - x/2} Fe_{0,5 - t/2 - x/2} Zn_x]O_4$$

wobei t = 0,6, m = 0,1 und x = 0,3.

## Revendications

1. Procédé de production d'un ferrite, comportant les étapes consistant à peser les oxydes et le carbonate de départ $Fe_2O_3$, $Li_2CO_3$, $TiO_2$, ZnO, MnO suivant la stoéchiométrie de

$$(Ti_t\ Fe_{2-m-t}\ Mn_m)\ [Li_{0.5 + t/2 - x/2}\ Fe_{0.5 - t/2 - x/2} Zn_x]O_4,$$

où t=0.6 m=0.1 x=0.3,

à mélanger les oxydes et les ferrites pendant 16 heures dans un broyeur à billes en acier inoxydable contenant de l'eau désionisée, à faire sécher le mélange dans un four, à faire passer le mélange, broyé, au tamis de 45 mailles, à oxyder le mélange, tamisé, dans un creuset en argile réfractaire à 840°C pendant 2,5 heures sous une atmosphère d'oxygène, à broyer le mélange, oxydé, dans un second cycle de 16 heures dans le broyeur à billes, à faire sécher le mélange, broyé et oxydé, dans un séchoir par pulvérisation, à ajouter des liants et des lubrifiants organiques, à presser le mélange comprenant le mélange séché, les liants et les lubrifiants sous une pression d'environ 1 tonne/cm$^2$, pour obtenir les formes désirées, à éliminer très lentement le liant organique par chauffage dans un four à circulation d'air forcée jusqu'à 300°C et à fritter à 980°C pendant 10 heures sous atmosphère d'oxygène, ce dont résulte un ferrite présentant la densification céramique typique.

2. Ferrite présentant la formule suivante:

$$(Ti_t\ Fe_{2-m-t}\ Mn_m)\ [Li_{0.5 + t/2 - x/2}\ Fe_{0.5 - t/2 - x/2}\ Zn_x]O_4,$$

où t=0.6 m=0.1 x=0.3.